# EUROPÄISCHE PATENTSCHRIFT

(11) **EP 0 936 965 B1**
(45) Veröffentlichungstag und Bekanntmachung des Hinweises auf die Patenterteilung: **25.04.2001**
(21) Anmeldenummer: 97909104.8
(22) Anmeldetag: 31.10.1997
(51) Int. Cl.: B29C 45/28, B29C 45/30, B29C 45/27

(54) **SPRITZGUSSDÜSE**
INJECTION MOULDING NOZZLE
FILIERE DE MOULAGE PAR INJECTION

(30) Priorität: 01.11.1996 CH 270596
(43) Veröffentlichungstag der Anmeldung: 25.08.1999
(73) Patentinhaber: Stern, Christian René, 3234 Vinelz (CH)
(72) Erfinder: Stern, Christian René, 3234 Vinelz (CH)
(74) Vertreter: Frei, Alexandra Sarah
(86) Internationale Anmeldenummer: CH9700415
(87) Internationale Veröffentlichungsnummer: WO9819847

(56) Entgegenhaltungen:
- EP-A- 0 051 252
- EP-A- 0 075 043
- WO-A-92/08597
- US-A- 4 266 723
- US-A- 4 318 686
- US-A- 4 652 230
- US-A- 4 787 836

## Beschreibung

Die Erfindung betrifft eine Düse zur Spritzgussverarbeitung von Kunststoffen gemäss dem Oberbegriff des unabhängigen Patentanspruchs.

In einer Spritzgussmaschine wird erhitzte, flüssige Kunststoffschmelze durch eine Spritzgussdüse in ein Spritzgusswerkzeug gespritzt, wo sie abkühlt und erstarrt. Üblicherweise gelangt die Kunststoffschmelze aus einem beheizten Düsengrundkörper über einen Durchflusskanal und durch eine zvlindrische bzw. kreisscheibenförmige Austrittsöffnung in einen Werkzeug-Eingangskanal. Die Austrittsöffnung liegt auf der Achse der Düse, und die Flussrichtung der Kunststoffschmelze beim Verlassen der Düse ist identisch mit der Achse. Erst nach dem Werkzeug-Eingangskanal wird die Kunststoffschmelze in der eigentlichen formgebenden Höhlung des Spritzgusswerkzeugs verteilt.

Nebst dem eigentlichen Formteil in der formgebenden Höhlung entsteht also auch ein Anguss im Werkzeug-Eingangskanal; dieser Anguss muss später vom Formteil getrennt und entfernt werden. Besonders bei Formteilen mit Bohrung, bspw. Compact-Disk-Trägerscheiben, wirkt sich dieser Anguss nachteilig auf den Produktionsprozess aus. Das Entfernen des Angusses und eventuell eines Bohrungskerns bringt zusätzliche Produktionsschritte mit sich. Der Anguss und eventuell der Bohrungskern stellen unerwünschte Materialveriuste dar; selbst dann, wenn sie wieder zu Kunststoffgranulat verarbeitet und eingeschmolzen werden können, ist diese Rezyklierung mit Aufwand verbunden. der die Produktionskosten erhöht und die Produktionszeiten verlängert.

Wegen Wärmeverlusten infolge von Wärmeleitung, Konvektion und Strahlung nimmt die Temperatur der Kunststoffschmelze im Düsenkopf ab. An der Austrittsöffnung des Düsenkopfes kann die Temperatur wesentlich niedriger sein als im beheizten Bereich des Grundkörpers. Ein solcher Temperarurabfall in der Düse ist unerwünscht und kann zu fatalen Störungen des ganzen Verarbeitungsablaufs führen. Eine erste Möglichkeit, den Temperaturabfall zu vermindern, ist ein direktes Beheizen der Düse. Damit müssen aber weitere Nachteile in Kauf genommen werden: Die Heizung, der zur Regelung benötigte Thermofühler und die benötigten elektrischen Leitungen und Kontakte sind störungsanfällig und brauchen viel Platz im Eintauchbereich.

Eine zweite Möglichkeit zur Verminderung des Temperaturabfalls in der Düse ist der Einsatz eines indirekt beheizten Wärmeleittorpedos, wie er bspw. aus "Technische Kunststoffe C.21: Heisskanalsystem indirekt beheizter Wärmeleittorpedo", Hrsg. Hoechst Aktiengesellschaft, 1982, bekannt ist. Ein solcher Wärmeleittorpedo ist im wesentlichen ein von der Kunststoffschmelze umflossener Stab mit hoher Wärmeleitfähigkeit im unbeheizten Düsenteil. Er überträgt Wärme vom beheizten Düsenteil in den Bereich der Austrittsöffnung. In vielen bekannten Düsen wird der Wärmeleittorpedo an den Düsengrundkörper oder an den Düsenkopf angeschraubt. Die Schraubverbindung bringt Nachteile mit sich: Sie gewährleistet keine optimale Wärmeübertragung in den Wärmeleittorpedo, und ihre Herstellung ist aufwendig und kostspielig. Die Schriften US-4,787,836, US-4,266,723 und US-4,652,230 umgehen dieses Problem indem der Wärmeleittorpedo zwischen Grundkörper und Düsenkopf eingeklemmt wird. Allerdings schien bisher ein solcher Wärmeleittorpedo für das Spritzen von flachen Formteilen mit Bohrung ungeeignet zu sein.

Eine weitere Möglichkeit zur Verminderung des Temperarurabfalls in der Düse besteht darin, ein temperaturausgleichendes Element um den unbeheizten Düsenkopf herum anzubringen. Ein solches temperaturausgleichendes Element vermindert den Temperaturabfall durch Wärmeleitung, Wärmeisolation und/oder Wärmereflexion. Es kann in Kombination mit einem Wärmeleittorpedo eingesetzt werden. Ein Beispiel dafür offenbart die Schrift WO 97/02129.

In der Schrift WO 92/08597 wird eine Spritzgussform zum Spritzen scheibenförmiger Formteile offenbart, welche ein erstes und ein zweites Teil enthält; diese beiden Teile definieren zusammen einen scheibenförmigen Hohlraum und sind gegeneinander verschiebbar. Ein drittes, zylinderförmiges Teil ragt durch den scheibenförmigen Hohlraum, um ein zentrales Loch im zu spritzenden Formteil zu definieren. Das dritte Teil ist aus einem Kern und einem Mantel zusammengesetzt, zwischen welchen sich ein zylindermantelförmiger Kanal zwecks Zuführung von Schmelze in den Hohlraum befindet. Der Kern ist innen mit elektrischen Heizelementen versehen. Diese Spritzgussform hat verschiedene Nachteile. Erstens benötigt die Heizung im Kern viel Platz, so dass die Dicke des Kerns einen bestimmten Wert nicht unterschreiten kann. So können nur Scheiben mit relativ grossen zentralen Löchern gespritzt werden. Zweitens braucht die Heizung im Kern eine Regelung, um die benötigten Temperaturen einzuhalten, was den Betrieb umständlich und störungsanfällig macht. Drittens ist nicht gewährleistet, dass die Wärme von der Heizung bis zum Formteil gelangt. Viertens ist die Herstellung der Spritzgussform gemäss der WO 92/08597 mit ihren vielen aneinander anzupassenden Teilen kompliziert und aufwendig.

Der Erfindung liegt die Aufgabe zugrunde, eine Düse zum Spritzen scheibenförmiger Formteile zu entwickeln, welche die obigen Nachteile nicht aufweist, also insbesondere bessere thermische Eigenschaften hat. einfacher zu bauen und leichter sowie robuster zu betreiben ist. Die Aufgabe wird gelöst durch die Düse, wie sie im unabhängigen Patentanspruch definiert ist.

Bei der erfindugsgemässen Düse liegt die eine Austrittsöffnung oder Liegen die mehreren Austrittsöffnungen im Düsenkopf im Abstand zur Düsenachse. Die Austrittsöffnungen müssen nicht unbedingt kreisscheibenförmig sein, sondern können andere Querschnittsgeometrien aufweisen; sie können z. B. als längliche Schlitze ausgebildet sein, deren Länge ein Vielfaches ihrer Höhe beträgt. Die Flussrichtung der Kunststoffschmelze beim Verlassen der Düse muss nicht unbedingt identisch sein mit der Richtung der Düsenachse, sondern kann z. B. senkrecht zur Düsenachse stehen.

Zur Führung des Kunststoffschmelze zur mindestens einen Austrittsöffnung dient vorzugsweise ein Adapter am Ende der Düse. Der Adapter wird bspw. am Torpedo befestigt. Der Wärmeleittorpedo ist gemäss der Erfindung zwischen dem Düsengrundkörper und dem Düsenkopf lediglich eingeklemmt. Die Düse wird also zusammengebaut, indem der Wärmeleittorpedo in den Grundkörper eingeschoben und durch Verschrauben des Düsenkopfes in den Düsenkörper eingeklemmt bzw. mit leichter Vorspannung eingepresst wird. Ein solcher Pressitz ist einfach herstellbar und gewährleistet ausserdem sehr gute Wärmeübertragung in den Wärmeleittorpedo und durch den Wärmeleittorpedo in den Adapter bzw. zur mindestens einen Austrittsöffnung. Die Herstellung der erfindungsgemässen Düse ist bedeutend einfacher und kostengünstiger als die Herstellung bekannter Düsen. Die erfindungsgemässe Düse ist also sowohl thermisch als auch mechanisch vorteilhaft.

Im erfindungsgemässen Verfahren wird Kunststoffschmelze aus mindestens einer Austrittsöffnung im Abstand zur Düsenachse aus der Düse in ein Spritzgusswerkzeug gespritzt. Nach dem Einspritzen der Kunststoffschmelze in das Spritzgusswerkzeug wird das Formteil in noch warmem Zustand von der Kunststoffschmelze im Düsenkopf abgetrennt, indem die Düse und das Spritzgusswerkzeug gegeneinander verschoben werden. Diese Verschiebung erfolgt im wesentlichen parallel zur Fläche der Düsenaustrittsöffnung.

Ein weiterer Vorteil der Erfindung besteht darin, dass Formteile in einer beinahe unbeschränkten Formenvielfalt hergestellt werden können, wobei Angussverluste und Bohrungskernverluste vermieden werden. Beispiele für nach dem erfindungsgemässen Verfahren und/oder mit der erfindungsgemässen Düse herstellbare Teile sind Platten mit Bohrungen, insbesondere Compact-Disk-Trägerscheiben, Hohlstrukturen wie Rohre, Becher oder Trichter, aber auch Platten ohne Bohrungen, bspw. Kreditkarten-Trägerplatten.

Die Erfindung wird im folgenden anhand von Figuren detailliert beschrieben.
Dabei zeigen schematisch:
- Fig. 1: einen Längsschnitt durch eine Grundform einer erfindungsgemässen Spritzgussdüse mit Wärmeleittorpedo,
- Fig. 2: einen Längsschnitt durch eine Ausführungsform der erfindungsgemässen Spritzgussdüse mit Wärmeleittorpedo,
- Fig. 3: einen Längsschnitt durch eine Ausführungsform der erfindungsgemässe Spritzgussdüse mit Adapter,
- Fig. 4 und 5: Querschnitte durch die Spritzgussdüse von Fig. 3 und
- Fig. 6 und 7: Längsschnitte durch weitere Ausführungsformen der erfindungsgemässen Spritzgussdüse mit Adapter.

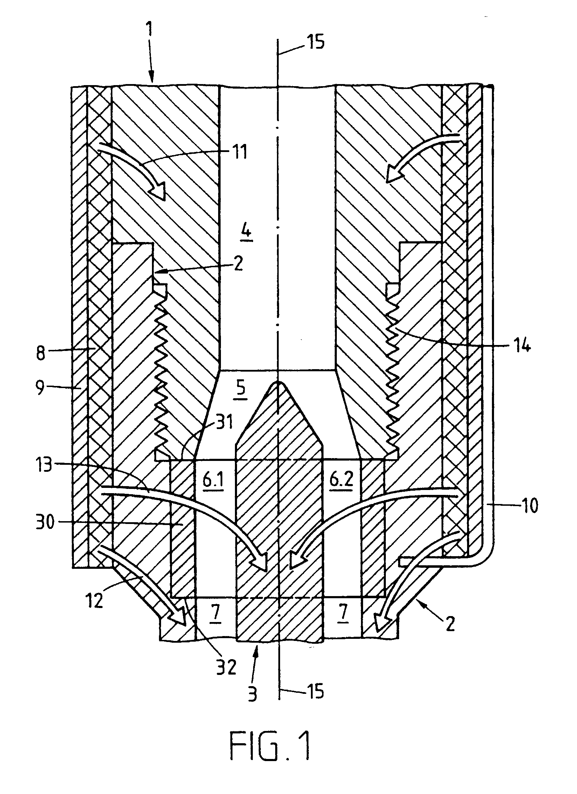

**Figur 1** zeigt eine Grundform einer erfindungsgemässen Spritzgussdüse mit einem Grundkörper 1, einem Düsenkopf 2 und einem Wärmeleittorpedo 3. Diese Grundform wird für die anlässlich der folgenden Figuren diskutierten Ausführungsbeispiele gebraucht. Sie gewährleistet eine mechanisch und thermisch vorteilhafte Anordnung des Düsenkopfes 2 und des Wärmeleittorpedos 3.

Kunststoffschmelze gelangt durch einen Kanal 4 im Grundkörper 1 in einen Düsenkopfvorraum 5 und weiter durch mindestens einen Durchlass 6.1, 6.2 im Wärmeleittorpedo 3 in einen Ringspalt 7. Eine Heizung 8 beheizt direkt den Grundkörper 1, angedeutet mit Pfeilen 11, direkt den Düsenkopf 2, angedeutet mit Pfeilen 12, und indirekt den Wärmeleittorpedo 3, angedeutet mit Pfeilen 13. Der Düsenkopf 2 ist vorzugsweise wärmeleitend, kann aber auch wärmeisolierend und/oder wärmereflektierend sein, um den Temperaturabfall im Düsenkopf 2 gering zu halten. Die Heizung 8 kann mit einem Rohr 9 zur Verbesserung der thermischen Eigenschaften umgeben sein. Im Düsenkopf oder an einer anderen Stelle der Düse kann ein Thermofühler 10 zur Temperaturmessung und Temperaturregelung angebracht sein.

Der Düsenkopf 2 ist vorzugsweise mit einem Gewinde 14 am Grundkörper 1 angeschraubt. Der Wärmeleittorpedo 3 ist vorzugsweise zwischen Grundkörper 1 und Düsenkopf 2 eingeklemmt. Zu diesem Zweck weist er bspw. eine Verdickung 30 auf; auf eine obere Schulter 31 der Verdickung 30 drückt der Grundkörper 1, auf eine untere Schulter 32 der Verdickung 30 drückt der Düsenkopf 2 mit einer Gegenkraft, wodurch der Wärmeleittorpedo 3 gehaltert wird. Das Einklemmen des Wärmeleittorpedos 3 gemäss der Erfindung ist eine einfache, sowohl thermisch als auch mechanisch vorteilhafte Befestigungsart. Der Pressitz gewährleistet eine optimale Wärmeübertragung von der Heizung 8 durch den Düsenkopf 2 in den Wärmeleittorpedo 3 und duch diesen bis zur (in Fig. 1 nicht dargestellten) Austrittsöffnung der Düse. Die Längsrichtung der Düse definiert eine Düsenachse 15.

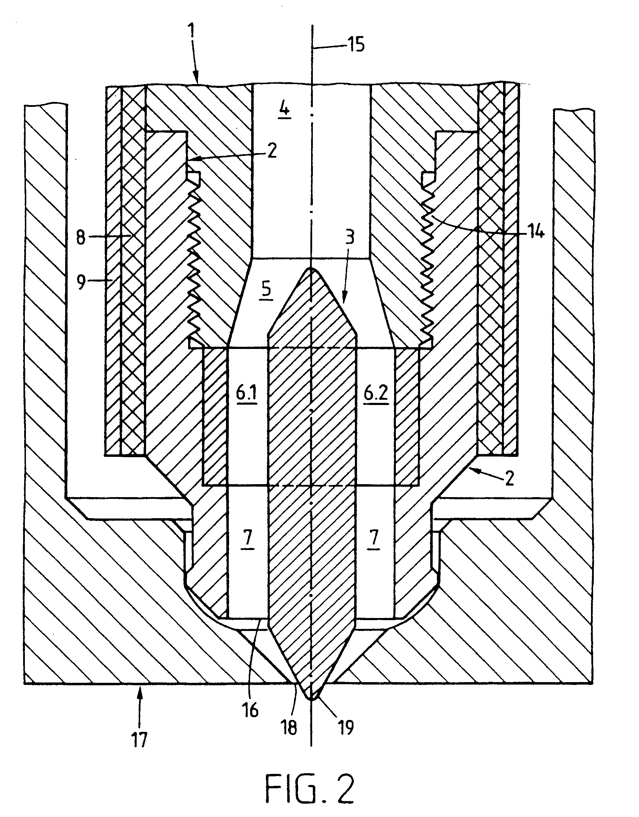

**Figur 2** zeigt eine Ausführungsform der erfindungsgemässen Düse mit einem Wärmeleittorpedo 2. Die Kunststoffschmelze wird durch den Ringspalt 7 zu einer im Bereich der Düsenachse 15 liegenden Austrittsöffnung 16 der Düse geführt. Die Düse ist in einem Spritzgusswerkzeug 17 mit einem Anschnitt 18, aus dem Kunststoffschmelze die Düse verlässt, eingelassen. Hinter dem Anschnitt 18 befindet sich eine hier nicht dargestellte formgebende Höhlung. Eine Torpedospitze 19 kann leicht aus dem Anschnitt 18 herausragen.

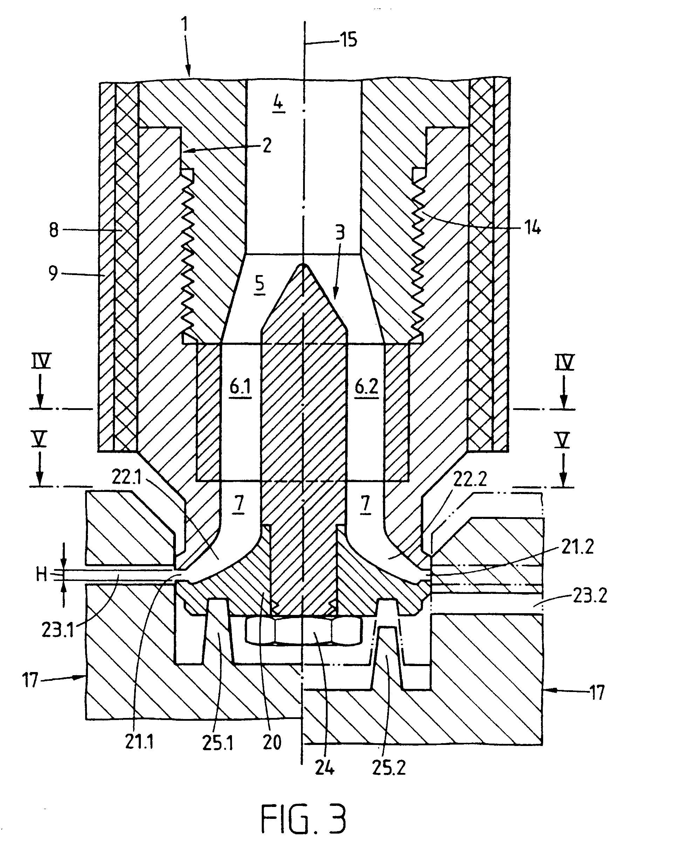

In einer anderen Ausführungsform der erfindungsgemässen Düse wird die Grundform von Fig. 1 gebraucht, um einen Adapter 20 anzubringen, dessen erste Ausführungsform in **Figur 3** dargestellt ist. Dabei ist links von der Düsenachse 15 die Düsenstellung bem Spritzen ins Spritzgusswerkzeug 17, rechts von der Düsenachse 15 die Düsenstellung nach dem Abtrennen eines Formteils zu sehen. Der Adapter 20 tritt an die Stelle der Torpedospitze 19 von Fig. 2; der Düsenkopf 2 ist dem Adapter 20 angepasst. Der Adapter 20 und das Ende des Düsenkopfes 2 sind derart geformt, dass sie eine oder mehrere im Abstand zur Düsenachse 15 angebrachte Austrittsöffnungen 21.1, 21.2 der Höhe H bilden, durch welche die Kunststoffschmelze den Düsenkopf 2 verlässt. Ein oder mehrere Kanäle 22.1, 22.2 im Düsenkopf lenken die Kunststoffschmelze derart um, dass ihre Flussrichtung beim Verlassen der Düse seknrecht zur Düsenachse 15 steht. Die Kunststoffschmelze wird also in diesem Ausführungsbeispiel radial nach aussen in mindestens eine Formgebende Höhlung 23.1, 23.2 im Spritzgusswerkzeug 17 gespritzt, wie in der linken Hälfte von Fig. 3 dargestellt.

Der Adapter 20 ist bspw. mit einer Schraube 24 oder mit anderen Befestigungsmitteln am Wärmeleittorpedo 3 befestigt. Damit der Adapter 20 den hohen Spritzdrücken standhält, ist es vorteilhaft, ihn mit mindestens einem Stützmittel 25.1, 25.2 gegen das Spritzgusswerkzeug 17 abzustützen. Die Stützmittel 25.1, 25.2 definieren ausserdem exakt die Endlage des Düsenkopfes 2 bezüglich des Spritzgusswerkzeugs 17.

Nach Beendigung des Spritzvorgangs wird das bereits etwas abgekühlte und feste Formteil von der heissen und flüssigen Kunststoffschmelze im Düsenkopf 2 durch eine eine Verschiebung zwischen der Düse und dem Spritzgusswerkzeug 17 abgetrennt. Diese Verschiebung geschieht vorzugsweise parallel zur Fläche der mindestens einen Austrittsöffnung 21.1, 21.2, im Beispiel von Fig. 3 also parallel zur Düsenachse 15.

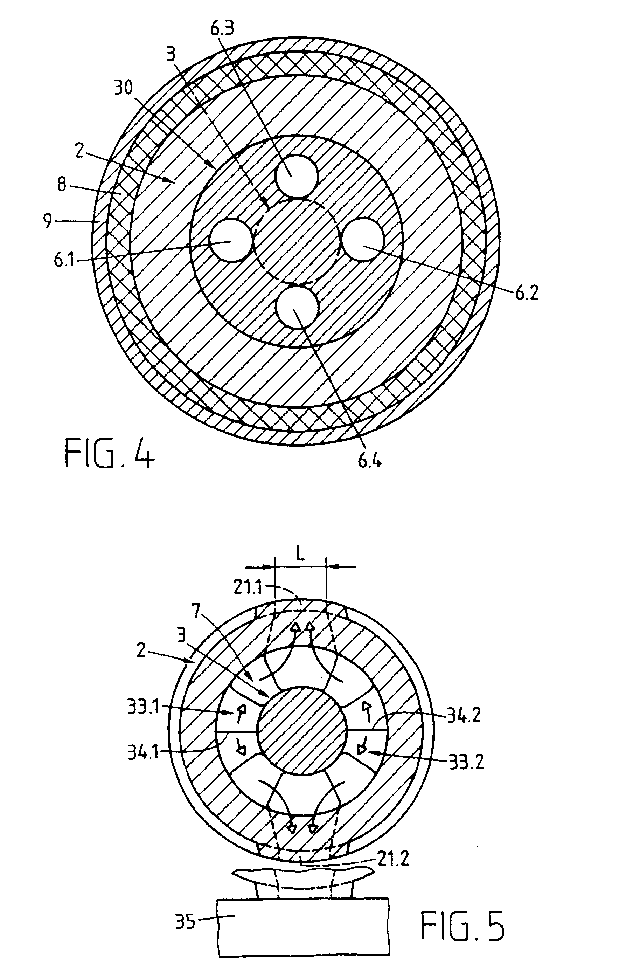

**Figur 4** zeigt einen Querschnitt durch die Düse von Fig. 3 an der mit IV-IV bezeichneten Stelle. In der Mitte befindet sich der Wärmeleittorpedo 3. Der Wärmeleittorpedo weist an der Stelle des Querschnittes von Fig. 4 die Verdickung 30 auf, in welcher die Durchlässe 6.1-6.4 verlaufen. In Fig. 4 sind bspw. vier Durchlässe 6.1-6.4 eingezeichnet; die Anzahl Durchlässe kann aber auch eine andere sein. Weiter aussen sind in Fig. 4 der Düsenkopf 2, die Heizung 8 und das Rohr 9 sichtbar.

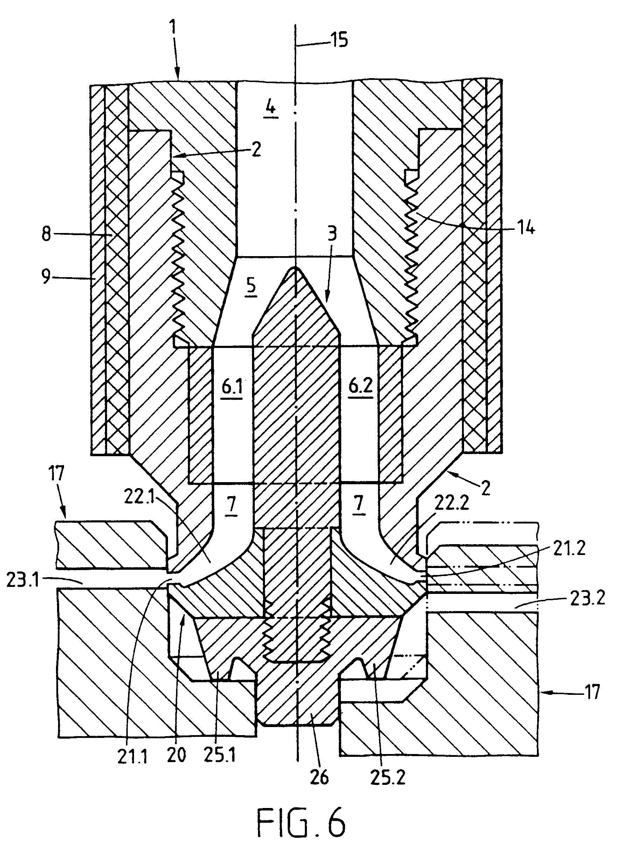

**Figur 5** zeigt einen Querschnitt durch die Düse von Fig. 3 an der mit V-V bezeichneten Stelle. Die Düse in diesem Ausführungsbeispiel hat zwei Austrittsöffnungen 21.1, 21.2. Im Ringspalt 7 wird die Kunststoffschmelze, deren Flussrichtungen mit Pfeilen angedeutet sind, bspw. durch keilförmige Trennwände 33.1, 33.2 mit je einem Grat 34.1, 34.2 auf die beiden Austrittsöffnungen 31.1, 21.2 verteilt. Die Austrittsöffnungen 21.1, 21.2 sind als längliche Schlitze ausgebildet, d. h. ihre Länge L beträgt ein Vielfaches ihrer Höhe H (siehe Fig. 3). Diese Ausführungsform ist geeignet für flache Formteile 35, bspw. für Kreditkarten.

Der in Fig. 3 dargestellte Düsenkopf 2 kann auch mit einer einzigen Austrittsöffnung versehen sein, welche sich über den ganzen Umfang der Düse erstreckt. Dabei ist der Umfang der Düse um ein Vielfaches grösser als die Höhe H der Austrittsöffnung. Diese Ausführungsform ist besonders geeignet zur Herstellung von flachen Formteilen mit Bohrung, bspw. Compact-Disk-Trägerscheiben.

**Figur 6** zeigt, in gleicher Darstellung wie Fig. 3, eine zweite Ausführungsform der erfindungsgemässen Düse. Im Unterschied zur Ausführungsform von Fig. 3 sind die Stützmittel 25.1, 25.2 nun am Adapter 20 angebracht. Der Adapter 20 ist mit einer Führung 26 für die geradlinige Trennbewegung parallel zur Düsenachse 15 versehen, welche im Spritzgusswerkzeug 17 geführt wird.

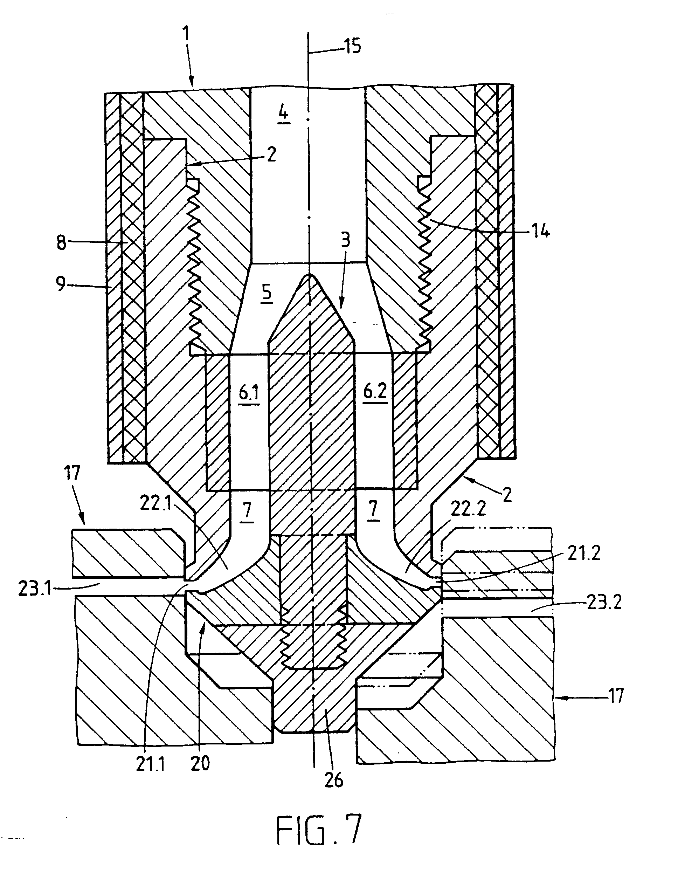

In **Figur 7** ist eine dritte Ausführungsform der erfindungsgemässen Düse analog zu den Figuren 3 und 6 dargestellt.

## Patentansprüche

1. Düse zur Spritzgussverarbeitung von Kunststoffen, enthaltend einen Grundkörper (1), und einen Düsenkopf (2), wobei die Düse mit mindestens einer Austrittsöffnung (21.1, 21.2) versehen ist, die Längsrichtung der Düse eine Düsenachse (15) definiert und dass die mindestens eine Austrittsöffnung (21.1, 21.2) im Abstand zur Düsenachse (15) liegt, da**durch gekennzeichnet,** dass die Düse einen Wärmeleittorpedo (3) beinhaltet, welcher zwischen dem Grundkörper (1) und dem Düsenkopf (2) eingeklemmt ist, und dass auf dem Wärmeleittorpedo (3) ein Adapter, mit dessen Hilfe Kunststoffschmelze zur mindestens einen Austrittsöffnung (21.1, 21.2) Führbar ist, befestigt ist.

2. Düse nach Anspruch 1, **dadurch gekennzeichnet**, dass die mindestens eine Anstrittsöffnung (21.1, 21.2) als länglicher Schlitz ausgebildet ist, dessen Länge (L) ein Vielfaches seiner Höhe (H) beträgt.

3. Düse nach Anspruch 2, **dadurch gekennzeichnet,** dass sie mit einer Austrittsöffnung (21.1) versehen ist, welche sich über den ganzen Umfang der Düse erstreckt.

4. Düse nach einem der Ansprüche 1-3, **dadurch gekennzeichnet**, dass die mindestens eine Austrittsöffnung (21.1, 21.2) derart angeordnet ist, dass die Flussrichtung der Kunststoffschmelze durch die mindestens eine Austrittsöffnung (21.1, 21.2) senkrecht zur Richtung der Düsenachse (15) steht.

5. Düse nach einem der Ansprüche 1-4, **gekennzeichnet durch** mindestens ein Stützmittel (25.1, 25.2), mit welchem der Adapter (20) gegen ein Spritzgusswerkzeug (17) abstüzbar ist.

6. Düse nach einem der Ansprüche 1-5, **dadurch gekennzeichnet,** dass der Düsenkopf (2) am Grundkörper (1) angeschraubt ist.

7. Düse nach einem der Ansprüche 1-6, **dadurch gekennzeichnet,** dass der Wärmeleittorpedo eine Verdickung (30) aufweist und der Grundkörper (1) auf eine obere Schulter (31) der Verdickung (30) drückt und der Düsenkopf (2) mit einer Gegenkraft auf eine untere Schulter (32) der Verdickung (30) drückt, wodurch der Wärmeleittorpedo (3) gehaltert wird.

## Claims

1. Nozzle for the processing of plastics by means of injection molding consisting of a basic body (1), and a nozzle head (2), whereby the nozzle is equipped with at least one outlet (21.1, 21.2), the lengthwise orientation of the nozzle defines a nozzle axis (15) and the at least one outlet (21.1, 21.2) is at a distance from the nozzle axis (15), **characterized** in that the nozzle comprises a thermally conducting torpedo (3) which is clamped between the base (1) and the nozzle head (2) and that on the thermally conducting torpedo (3) an adapter is fixed with the help of which plastic molding compound can be guided to the at least one outlet (21.1, 21.2).

2. Nozzle according to claim 1, **characterized** in that the at least one outlet (21.1, 21.2) is designed to be a lengthy slot the length (L) of which is a multiple of its height (H).

3. Nozzle according to claim 2, **characterized** in that it is equipped with an outlet (21,1) which extends over the whole circumference of the nozzle.

4. Nozzle according to one of claims 1 to 3, **characterized** in that the at least one outlet (21.1, 21.2) is arranged such that the flow direction of the plastic molding compound through the at least one outlet (21.1, 21.2) is at a right angle to the direction of the nozzle axis (15).

5. Nozzle according to claim 1 to 4, **characterized** by at least one supporting means is (25.1, 25.2) with which the adapter (20) is supportable against an injection mold (17).

6. Nozzle according to claim 1 to 5, **characterized** in that the nozzle head (2) is bolted onto the basic body (1).

7. Nozzle according to one of claims 1 to 6, **characterized** in that the thermally conducting torpedo comprises an enlargement (30) and the basic body (1) presses onto an upper shoulder (31) of the enlargement and the nozzle head (2) presses onto a lower shoulder (32) of the enlargement by which the thermally conducting torpedo (3) is held

## Revendications

1. Ajutage pour le traitement de moulage par injection de matières synthétiques, contenant un corps de base (1) et une tête d'ajutage (2), l'ajutage étant doté d'au moins une ouverture de sortie (21.1, 21.2), la direction longitudinale de l'ajutage définissant en axe d'ajutage (15) et l'ouverture de sortie (21.1, 21.2), au moins une, étant située à distance de l'axe (15) de l'ajutage,
caractérisé en ce que l'ajutage contient une torpille thermiquement conductrice (3) qui est serrée entre le corps de base (1) et la tête (2) de l'ajutage, et en ce sur la torpille thermiquement conductrice (3) est fixé un adaptateur à l'aide duquel de la matière synthétique fondue peut être amenée à au moins une ouverture de sortie (21.1, 21.2).

2. Ajutage selon la revendication 1, caractérisé en ce que l'ouverture de sortie (21.1, 21.2), au moins une, est configurée comme fente allongée dont la longueur (L) est un multiple de sa hauteur (H).

3. Ajutage selon la revendication 2, caractérisé en ce qu'il est doté d'une ouverture de sortie (21.1) qui s'étend sur toute la périphérie de l'ajutage.

4. Ajutage selon l'une des revendications 1 à 3, caractérisé en ce que l'ouverture de sortie (21.1, 21.2), au moins une, est disposée de telle sorte que le sens d'écoulement de la matière synthétique fondue à travers l'ouverture de sortie (21.1, 21.2), au moins une, est perpendiculaire à la direction de l'axe (15) de l'ajutage.

5. Ajutage selon l'une des revendications 1 à 4, caractérisé par au moins un moyen d'appui (25.1, 25.2) avec lequel l'adaptateur (20) peut être soutenu contre un outil (17) de moulage par injection.

6. Ajutage selon l'une des revendications 1 à 5, caractérisé en ce que la tête (2) de l'ajutage est vissée sur le corps de base (1).

7. Ajutage selon l'une des revendications 1 à 6, caractérisé en ce que la torpille thermiquement conductrice présente un épaississement (30) et le corps de base (1) repousse un épaulement supérieur (31) de l'épaississement (30), et la tête (2) de l'ajutage repousse avec une force opposée un épaulement inférieur (32) de l'épaississement (30), ce qui retient la torpille thermiquement conductrice (3).
